**Europäisches Patentamt**

**European Patent Office**

**Office européen des brevets**

(19)

(11) Veröffentlichungsnummer : **0 261 735 B1**

(12) **EUROPÄISCHE PATENTSCHRIFT**

(45) Veröffentlichungstag der Patentschrift :
05.06.91 Patentblatt 91/23

(51) Int. Cl.⁵ : **G01K 13/02**

(21) Anmeldenummer : **87201799.1**

(22) Anmeldetag : **15.09.87**

(54) **Vorrichtung zum Erfassen der Temperatur in wasserführenden Rohrleitungen.**

(30) Priorität : 20.09.86 DE 8625181 U

(43) Veröffentlichungstag der Anmeldung :
30.03.88 Patentblatt 88/13

(45) Bekanntmachung des Hinweises auf die
Patenterteilung :
05.06.91 Patentblatt 91/23

(84) Benannte Vertragsstaaten :
DE FR GB IT SE

(56) Entgegenhaltungen :
EP-A- 0 132 643
DE-A- 3 038 956
DE-A- 3 316 995
FR-A- 2 441 157

(73) Patentinhaber : **Bauknecht Hausgeräte GmbH**
**Am Wallgraben 99**
**W-7000 Stuttgart 80 (DE)**
**DE**
Patentinhaber : **WHIRLPOOL**
**INTERNATIONAL B.V.**
**Tarwelaan 58**
**NL-5632 KG Eindhoven (NL)**
**FR GB IT SE**

(72) Erfinder : **Faber, Bernd**
**Albert-Einstein-Strasse 1**
**W-6883 Spiesen-Elversberg (DE)**

(74) Vertreter : **Meier, Friedrich, Dipl.-Ing. et al**
**Philips Patentverwaltung GmbH**
**Wendenstrasse 35 Postfach 10 51 49**
**W-2000 Hamburg 1 (DE)**

## Beschreibung

Bei elektrischen Geschirrspülmaschinen und ähnlichen Geräten ist es notwendig, das Gerät auch abhängig von der Temperatur der Wasch- oder Spülflüssigkeit zu steuern. In der Regel geschieht dies unter Verwendung von Thermostaten, die direkt in die Wasch- oder Spüllauge eingesetzt sind. Bei bestimmten Gerätetypen, insbesondere beim Einsatz von Durchlauferhitzern, werden Thermostate mit Schaltelementen oder auch Thermofühler häufig unmittelbar in Kontakt mit einem Teil der wasserführenden Rohrleitungen gebracht. Die Anbringung derartiger Meßfühler geschieht meist über Schraub- oder Klemmverbindungen unabhängig davon, ob der Fühler selbst als Schaltelement ausgebildet oder nur als temperaturempfindliches Element mit einer nachgeschalteten Elektronik und Schaltelementen arbeitet.

Ferner ist es bekannt, an die Außenwandung von Flüssigkeitsbehältern aus Metall Thermostate anzulegen. Hierfür sind an den Behälterwandungen Befestigungselemente anzubringen, die insbesondere bei großflächigen Wandungsteilen nur schwer ohne Störung der glatten Innenflächen anzubringen sind und bei denen die Thermostate nur dann wirksam arbeiten, wenn an der Anlegestelle immer Flüssigkeit vorhanden ist, was bei Geräten mit einem kleinen Wasserverbrauch kaum zu erfüllen ist.

Auch die in der FR-A-2 441 157 beschriebenen Thermostate, die über Gummidichtungen in Behälterwandungen eingeknüpft sind, haben gleiche oder gleichartige Nachteile, von den mit eingesetzten Dichtungen verbundenen Problemen einmal abgesehen.

Der Erfindung liegt die Aufgabe zugrunde, eine Vorrichtung anzugeben, mit der man in einfacher Art und Weise Elemente zur Temperaturerfassung in Wärmekontakt mit der in Rohrleitungen geführten Flüssigkeit bringen kann. Gemäß der Erfindung geschieht dies bei einer Vorrichtung zum Erfassen der Temperatur in wasserführenden Rohrleitungen unter Verwendung von Temperaturerfassungselementen dadurch, daß an die Rohrleitung seitlich ein Stutzen angeformt ist, in den flüssigkeitsdicht ein dosenförmiger Körper aus wärmeleitendem Material zur Aufnahme der Temperaturerfassungs-elemente eingesetzt ist und daß auf den dosenförmigen Körper ein Formteil nach Art eines Klemmbügels aufgesetzt ist, der unter elastischer Deformation die eingesetzten Elemente gegen die Bodenfläche des dosenförmigen Körpers preßt.

Mit einer Vorrichtung dieser Art ist es möglich, beliebige, die Temperatur erfassenden Elemente einzeln oder auch als Gruppe ohne Eingriff in den Flüssigkeitskreislauf zu montieren und im Servicefall auch auszutauschen. Eine Vorrichtung nach der Erfindung ermöglicht es auch, bei gleicher Aufbauform unterschiedliche Elemente zur Temperaturerfassung in die verschiedensten Geräte einzusetzen oder auch im gleichen Gerät verschiedenartig wirkende Elemente zu verwenden. Voraussetzung dafür ist nur, daß die Elemente selbst vom Körper her gleichartig ausgebildet sind.

Vorteilhafte Ausführungsformen der Vorrichtung nach der Erfindung werden anhand der Zeichnung beschrieben und die Wirkungsweise erläutert.

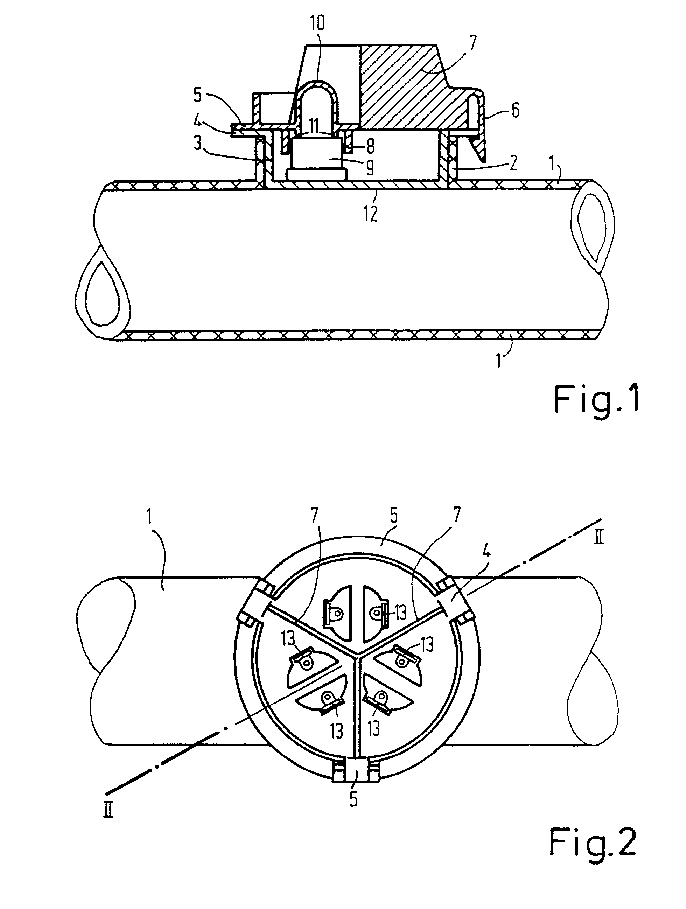

Die Fig. 1 zeigt im Aufriß zum Teil im Schnitt und die Fig. 2 im Grundriß eine Vorrichtung nach der Erfindung im Einsatz an einer Rohrleitung.

An eine Rohrleitung 1, z.B. ein Formschlauch, ist seitlich ein zylindrischer Stutzen 2 angesetzt, vorzugsweise angeformt, der einen dosenförmigen Körper 3 aus gut leitenden Material, z.B. Metall, flüssigkeitsdicht, z.B. durch einvulkanisieren, aufnimmt. Der dosenförmige Körper 3 hat einen nach außen abgewinkelten Tellerrand 4. Ein aus federelastischem Material, z.B. Kunststoff, gefertigtes Formteil 5 ist auf den dosenförmigen Körper 3 aufgesetzt und mit bügelförmigen Rastteilen 6 am Rand 4 gehaltert. Das Formteil 5 hat Rippen 7, die es in sich versteifen und die elektrischen Anschlüsse 13, gegeneinander abschirmen. Nach unten abstehende Teile 8 bilden Halter für die Temperaturerfassungselemente 9.

Das Formteil 5 ist in Teilen so ausgeformt, daß es Federbügel 10 bildet, die mit ihren Füßen 11 die Temperaturerfassungselemente 9 gegen den Boden 12 des Körpers 3 drücken. Die Temperaturerfassungselemente 9 können als schaltende Thermostate, oder aber als Fühlerelemente mit einem temperaturabhängigen Innenwiderstand ausgebildet sein. Der Anschluß erfolgt über die elektrischen Kontakte 13.

Das Formteil 5 mit seinen federelastisch ausgeformten Teilen und den Rastteilen 6 sorgt in einfacher, aber betriebssicherer Weise für einen guten Wärmeübergang zum Innenraum des Rohres 1. Im Montage- und im Servicefall können ein oder mehrere Thermoelemente bzw. Thermostate leicht eingesetzt oder ausgetauscht werden.

## Ansprüche

1. Vorrichtung mit Temperaturerfassungselementen (9) zum Erfassen der Temperatur in wasserführenden Rohrleitungen (1), z.B. in elektrischen Geschirrspülern, dadurch gekennzeichnet, daß an die Rehrleitung (1) seitlich ein Stutzen (2) angeformt ist, in den flüssigkeitsdicht ein dosenförmiger Körper (3) aus wärmeleitendem Material zur Aufnahme der Temperaturerfassungselemente (9) eingesetzt ist und daß auf den dosenförmigen Körper (3) ein Formteil (5) nach Art eines Klemmbügels aufgesetzt ist, der unter elastischer Deformation die eingesetzten Temperaturerfassungselemente (9) gegen die Bodenfläche (12) des dosenförmigen Körpers (3) preßt.

2. Vorrichtung nach Anspruch 1, dadurch gekennzeichnet, daß der dosenförmige Körper (3) mit von der Dosenwandung des Körpers (3) abstehenden Randteilen (4) versehen ist, die von bügelförmigen federalstichen Rastteilen (6) des Formteiles (5) umgriffen sind.

3. Vorrichtung nach Anspruch 1 oder 2, dadurch gekennzeichnet, daß das Formteil (5) Halter (8) für die Temperaturerfassungselemente aufweist und im Bereich der Halter (8) Federbügel (10) zum Anpressen der Temperaturerfassungselemente (9) angeordnet sind.

4. Vorrichtung nach Anspruch 3, dadurch gekennzeichnet, daß das Formteil (5) aus Kunststoff einstückig ausgeformt ist.

## Claims

1. A device comprising temperature detection elements (9) for detecting the temperature in water pipes (1), for example in electrical dish-washers, characterized in that the pipe (1) is formed with a lateral socket (2) in which a box-shaped body (3) of a thermally conductive material is mounted in a liquid-tight manner to accommodate the temperature detection elements (9), and a moulded part (5) similar to a clamping bracket is mounted on the box-shaped body (3) to press the inserted temperature detection elements (9) against the bottom surface (12) of the box-shaped body (3).

2. A device as claimed in Claim 1, characterized in that the box-shaped body (3) comprises peripheral portions (4) which project from the box wall of the body (3) and which are enclosed by bracket-shaped resiliently elastic latching portions (6) of the moulded part (5).

3. A device as claimed in Claim 1 or 2, characterized in that the moulded part (5) comprises holders (8) for the temperature detection elements, and resilient clips (10) for holding down the temperature detection elements (9) are arranged at the location of the holders (8).

4. A device as claimed in Claim 3, characterized in that the moulded part (5) is moulded in one piece from a plastics.

## Revendications

1. Dispositif muni d'éléments de détection de température (9) pour détecter la température dans des canalisations d'eau (1), par exemple dans des lave-vaisselle électriques, caractérisé en ce que sur le côté latéral de la canalisation (1) est rapportée une tubulure (2) dans laquelle est placé de façon étanche au liquide un corps en forme de boîte (3) en matériau conducteur de chaleur pour recevoir les éléments de détection de température (9) et que, sur le corps en forme de boîte (3), est disposée une pièce moulée (5) sous la forme d'un étrier de serrage pressant par déformation élastique les éléments de détection de température (9) utilisés contre la surface du fond (12) du corps en forme de boîte (3).

2. Dispositif selon la revendication 1, caractérisé en ce que le corps en forme de boîte (3) présente des éléments marginaux en saillie (4) serrés par des éléments élastiques d'encliquetage en forme d'étrier (6) de la pièce moulée (5).

3. Dispositif selon la revendication 1 ou 2, caractérisé en ce que la pièce moulée (5) présente des supports (8) pour les éléments de détection de la température et en ce que, à l'endroit des supports (8), sont disposés des étriers élastiques (10) servant à presser sur les éléments de détection de la température (9).

4. Dispositif selon la revendication 3, caractérisé en ce que la pièce moulée (5) est formée d'une seule pièce à partir d'une matière plastique.

Fig.1

Fig.2